# EUROPÄISCHE PATENTSCHRIFT

(11) **EP 2 195 186 B1**
(45) Veröffentlichungstag und Bekanntmachung des Hinweises auf die Patenterteilung: **18.03.2015**
(21) Anmeldenummer: 08801242.2
(22) Anmeldetag: 01.09.2008
(51) Int. Cl.: B60L 13/04

(54) **MAGNETSCHWEBEFAHRZEUG UND VERFAHREN ZUM ANHEBEN UND/ODER ABSETZEN DESSELBEN**
MAGNETIC LEVITATION VEHICLE AND METHOD FOR LIFTING AND/OR LOWERING SAID VEHICLE
VÉHICULE À SUSTENTATION MAGNÉTIQUE, ET PROCÉDÉ DE SOULÈVEMENT ET/OU DE DESCENTE DE CE VÉHICULE

(30) Priorität: 10.10.2007 DE 102007051231
(43) Veröffentlichungstag der Anmeldung: 16.06.2010
(73) Patentinhaber: ThyssenKrupp Transrapid GmbH, 34127 Kassel (DE)
(72) Erfinder: ZHENG, Qinghua, 82024 Taufkirchen (DE); BECKER, Peter, 82140 Olching (DE)
(74) Vertreter: Lorenz, Bernd Ingo Thaddeus
(86) Internationale Anmeldenummer: PCT/DE2008/001434
(87) Internationale Veröffentlichungsnummer: WO 2009/046690

(56) Entgegenhaltungen:
- DE-A1- 3 338 028
- DE-A1-102004 012 746
- DE-A1-102004 013 692

## Beschreibung

Die Erfindung betrifft ein Verfahren zum Anheben eines Magnetschwebefahrzeugs von einem Fahrweg und zum Absetzen eines Magnetschwebefahrzeugs auf einem Fahrweg gemäß dem Oberbegriff des Anspruchs 1 und ein dafür geeignetes Magnetschwebefahrzeug nach dem Oberbegriff des Anspruchs 7.

Bekannte Magnetschwebefahrzeuge weisen eine Vielzahl von in ihrer Längsrichtung hintereinander angeordneten Tragmagneteinheiten auf (z.B. DE 10 2004 012 746 A1). Eine praktische Ausführungsform sieht vor, das Magnetschwebefahrzeug, in seiner Längsrichtung betrachtet, auf beiden Seiten mit je neun hintereinander angeordneten Tragmagneten zu versehen, wobei sieben mittlere Tragmagnete aus je zwei hintereinander angeordneten, fest miteinander verbundenen Tragmagneteinheiten bestehen, während am Vorderende und am Hinterende des Magnetschwebefahrzeugs jeweils ein aus nur einer Tragmagneteinheit bestehender Tragmagnet angeordnet ist. Insgesamt verfügt das Fahrzeug daher über sechszehn derartige Tragmagneteinheiten. Zur Herstellung eines für den Fahrbetrieb erforderlichen Schwebezustands, in dem die Polflächen der Tragmagnete z.B. einen Abstand von 10 mm vom Fahrweg bzw. einem an diesem angebrachten Langstator aufweisen, werden alle Tragmagneteinheiten gleichzeitig aktiviert, um dadurch das Fahrzeug allmählich vom Fahrweg abzuheben. Entsprechend wird das Fahrzeug, wenn es z.B. an einem Bahnhof zum Stillstand gebracht worden ist, nicht abrupt, sondern zur Vermeidung merkbarer Stöße allmählich abgesenkt und auf dem Fahrweg abgesetzt. Dadurch wird der Abstand der Polflächen vom Fahrweg erheblich vergrößert, z.B. auf ein Maß von 40 mm.

Da die Kraft eines Elektromagneten bei gleicher Stromstärke um so kleiner ist, je größer der Luftspalt wird, müssen die in den Tragmagneteinheiten angeordneten Elektromagnete während eines Anhebe- oder Absetzvorgangs mit erheblich größeren Strömen erregt werden, als dies für den normalen Fahrbetrieb gilt. Eine Folge davon ist, daß die internen, z.B. aus Batterien und/oder externen Stromversorgungseinrichtungen gespeisten Bordnetze (z.B. DE 10 2004 018 308 A1) nur für die vergleichsweise kurzen Zeitspannen der Anhebe- und Absetzvorgänge größer dimensioniert werden müssen, als der Normalbetrieb dies erfordert. Das ist in der Regel mit einem erhöhtem Fahrzeuggewicht und/oder mit erhöhten Kosten und/oder mit zusätzlichen Ladezyklen für die Bordbatterien verbunden, was sämtlich unerwünscht ist.

Aus der DE 33 38 028 A1 ist eine Magnetanordnung für ein Magnetschwebefahrzeug bekannt, welches schnelle Stellgeschwindigkeiten und geringe Verluste ermöglicht. Zu diesem Zweck werden die Ströme der Tragmagneteinheiten zum Konstanthalten eines vorgegebenen Spaltes in einen konstanten Strom einer Erregerspule und einen geringeren, stellbaren Strom aufgeteilt, der lediglich einer Zusatzspule zugeführt wird. Der zusätzliche Strom ermöglicht eine Feineinstellung, während der Spalt an sich von dem konstanten Strom bereitgehalten wird. Das Anheben und Absenken des Magnetschwebefahrzeuges ist nicht beschrieben.

Ausgehend davon besteht das technische Problem der vorliegenden Erfindung darin, die eingangs bezeichneten Verfahren und Magnetschwebefahrzeuge so zu gestalten, daß die Anhebe- und Absetzvorgänge mit einem erheblich geringeren Strombedarf durchgeführt werden können, ohne daß dadurch der Fahrkomfort merklich reduziert wird.

Zur Lösung dieser Aufgabe dienen die Merkmale der Ansprüche 1 und 7.

Die Erfindung geht von der Feststellung aus, daß ein nacheinander erfolgendes Aktivieren bzw. Deaktivieren der einzelnen Tragmagneteinheiten in mechanischer Hinsicht keine Schwierigkeiten bereitet und von der Fahrzeuggeometrie ohne weiteres aufgefangen werden kann. Dagegen ergibt sich in elektrischer Hinsicht der Vorteil, daß der Strombedarf wesentlich reduziert wird. Werden z. B. für den oben genannten Fall, daß das Magnetschwebefahrzeug auf beiden Seiten über je sechzehn Tragmagneteinheiten verfügt, nacheinander acht Schritte durchgeführt, während derer nur je vier Tragmagneteinheiten aktiviert bzw. deaktiviert werden, dann beträgt der Strombedarf pro Schritt nur noch ein Achtel desjenigen Strombedarfs, der beim gleichzeitigen Betätigen aller Tragmagneteinheiten benötigt wird.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 schematisch die linke Seite eines üblichen Magnetschwebefahrzeugs;
Fig. 2 eine vergrößerte Einzelheit X des Magnetschwebefahrzeugs nach Fig. 1 mit weiteren Einzelheiten;
Fig. 3 schematisch einen Regelkreis für Tragmagneteinheiten des Magnetschwebefahrzeugs nach Fig. 1 und 2;
Fig. 4 den zeitlichen Verlauf von Sollwerten für den Regelkreis nach Fig. 3;
Fig. 5 ein Ausführungsbeispiel einer erfmdungsgemäßen Steuervorrichtung; und
Fig. 6A bis 6C schematisch das erfindungsgemäße das Anheben eines Magnetschwebefahrzeugs von einem Fahrweg in mehreren zeitlich versetzten Schritten.

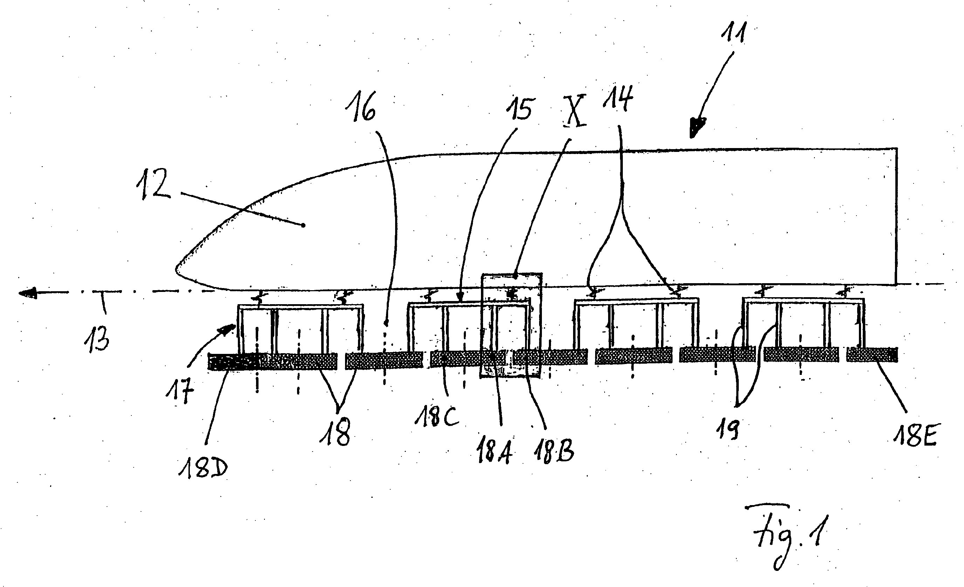

Nach Fig. 1 enthält ein Magnetschwebefahrzeug 11 einen Wagenkasten 12, an dessen Unterseite mehrere, in einer Längsrichtung 13 des Magnetschwebefahrzeugs 11 beabstandete Luftfedern 14 montiert sind, wobei die Längsrichtung 13 gleichzeitig die Fahrtrichtung ist. Je eine Luftfeder 14 wirkt auf das vordere bzw. hintere Ende von zugeordneten Schwebegestellen 15 ein, die den Wagenkasten 12 tragen und zwischen denen als Zwischenräume dargestellte Gelenkpunkte 16 vorgesehen sind, die dazu dienen, daß die Schwebegestelle 15 die erforderlichen Längs- und Querbewegungen ausführen können.

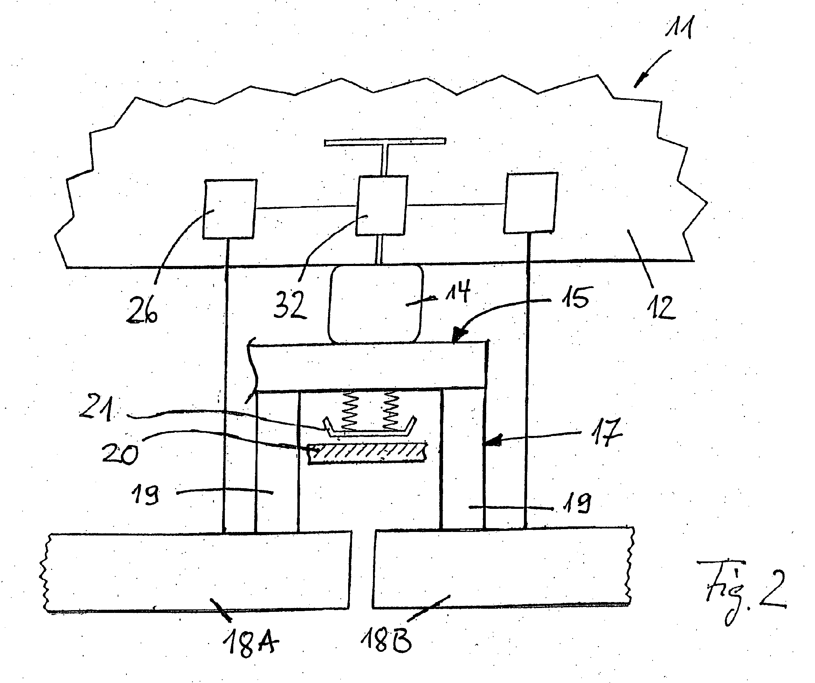

Die Schwebegestelle 15 sind an ihren Enden mit Schwebegestellrahmen 17 versehen, die auf Tragmagneteinheiten 18 abgestützt sind. Im Ausführungsbeispiel weist jeder Schwebegestellrahmen 17 zwei in der Längsrichtung 13 hintereinander liegende Abstützstellen 19 (vgl. auch Fig. 2) auf, die an zugehörigen Tragmagneteinheiten 18 befestigt sind. Insbesondere ist die Anordnung so getroffen, daß an jedem Schwebegestellrahmen 17 eines Schwebegestells 15 zwei in Längsrichtung 13 hintereinander liegende Tragmagneteinheiten 18 aneinander grenzen, die in Fig. 2 mit 18A und 18B bezeichnet sind. Außerdem sind je zwei Tragmagneteinheiten (z.B. 18A und 18C) längs in Fig. 1 gestrichelt dargestellten Trennlinien starr miteinander verbunden, während die beidseits der Gelenkpunkte 16 angeordneten Tragmagneteinheiten (z.B. 18A und 18B in Fig. 1) gelenkig an den zugehörigen Abstützstellen 19 befestigt sind. In einem mittleren Bereich des Magnetschwebefahrzeugs 11 bilden auf diese Weise je zwei starr miteinander verbundene, auch als Halbmagnete bezeichnete Tragmagneteinheiten 18 einen Tragmagneten.

Das in Fig. 1 gezeigte Magnetschwebefahrzeug 11 bildet z.B. die vorderste Sektion eines Zuges. Daher ist hier ein vorderer, nur eine Tragmagneteinheit 18D aufweisender Tragmagnet starr mit dem darauf folgenden Tragmagneten verbunden, während am hinteren Ende ein ebenfalls aus nur einer Tragmagneteinheit 18E gebildeter Tragmagnet mit einem entsprechenden Tragmagneten starr verbunden wird, der an einem nachfolgenden, in Fig. 1 nicht dargestellten Magnetschwebefahrzeug angebracht ist, das eine mittlere Sektion oder auch hintere Sektion eines Zuges bildet.

Weiterhin ist in Fig. 2 eine Gleitschiene 20 schematisch dargestellt, die an einem nicht gezeigten Fahrweg für das Magnetschwebefahrzeug 11 angebracht ist und auf der das Magnetschwebefahrzeug 11 mittels Gleitkufen 21, die an den Schwebegestellen 15 befestigt sind, abgesetzt wird, wenn die Tragmagneteinheiten 18 stromlos sind und daher nicht der Funktion "Tragen" dienen können.

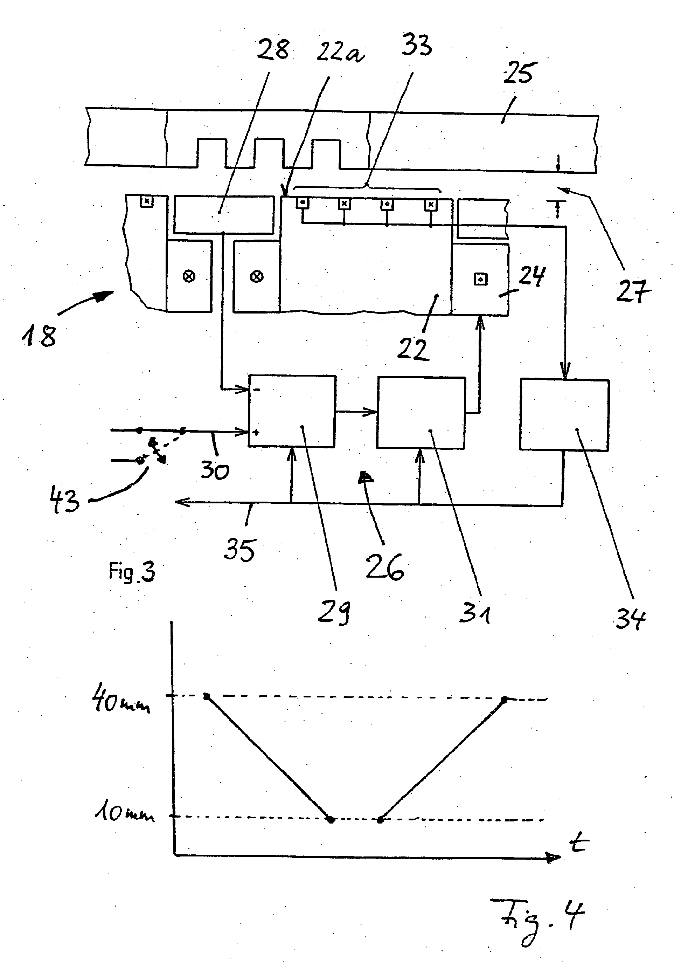

Gemäß Fig. 3 enthalten die Tragmagneteinheiten 18 eine Mehrzahl von Elektromagneten mit Magnetpolen, die im wesentlichen aus Kernen 22 und um diese gelegten Wicklungen 24 bestehen, wobei den Wicklungen 24 die zur Herstellung des gewünschten Schwebezustands erforderlichen, elektrischen Ströme zugeführt werden. Gleichzeitig dienen die Tragmagneteinheiten 18 z.B. als Erregermagnete eines dem Antrieb des Magnetschwebefahrzeugs 11 dienenden Langstator-Linearmotors, der eine den Tragmagneteinheiten 18 gegenüberliegende, am Fahrweg befestigte Reaktionsschiene 25 (Fig. 3) aufweist, die mit üblichen Dreiphasen-Wechselstrom-Wicklungen versehen ist.

Die die Wicklungen 24 der Tragmagneteinheiten 18 durchfließenden Ströme werden in der Regel mit Hilfe von Regelkreisen 26 (Fig. 3) so geregelt, daß in dem für den normalen Fahrbetrieb vorgesehenen Schwebezustand ein Tragspalt 27 von z.B. 10 mm zwischen Magnetpolflächen 22a und der Reaktionsschiene 25 entsteht. Zur Einhaltung dieses Tragspalts 27 weisen die Regelkreise 26 Spaltsensoen 28 auf, die zweckmäßig an dieselbe Ebene wie die Magnetpolflächen 22a grenzen und mit induktiven oder kapazitiven Mitteln die aktuelle Größe, d.h. den Istwert des Tragspalts 27 messen. Die von den Spaltsensoren 28 abgegebenen elektrischen Signale werden einem Regler 29 zugeführt und in diesem mit einem über eine Leitung 30 fest vorgegebenen oder adaptierten Sollwert verglichen. Der Regler 29 ermittelt daraus ein Differenz- bzw. Stellsignal für ein Stellglied 31, das seinerseits den Strom durch die Wicklungen 24 so steuert, daß der Spalt 27 eine im wesentlichen konstante Größe hat und während der Fahrt beibehält.

Soll das Magnetschwebefahrzeug in einem Bahnhof od. dgl., nachdem es dort zum Stillstand gebracht worden ist, mittels der Gleitkufen 21 (Fig. 2) auf den Gleitschienen 20 abgesetzt werden, braucht lediglich dem Regler 29 über die Leitung 30 ein entsprechender Sollwert (z.B. entsprechend einer Spaltgröße = unendlich) vorgegeben werden. Dadurch werden die die Wicklungen 24 durchfließende Ströme entsprechend reduziert oder auf Null gesetzt, wodurch die Tragmagneteinheiten 18 ihre Tragkraft verlieren und das Magnetschwebefahrzeug 11 auf dem Fahrweg abgesetzt wird.

Die Luftfedern 14 sind an eine hier nicht dargestellte Druckluftquelle angeschlossen und, wie in Fig. 2 angedeutet ist, mit einer Steuereinheit 32 verbunden. Diese ermöglicht es, die Luftfedern 14 wahlweise an die Druckluftquelle oder eine ebenfalls nicht dargestellte Entlüftungsleitung anzuschließen.

Die Energieversorgung der Regelkreise 26 und der Steuereinheiten 32 erfolgt z.B. mit Hilfe von in die Kerne 22 eingelassene Lineargeneratoren 33 (Fig. 3) und mit diesen verbundenen Spannungswandlern 34, die über Leitungen 35 auch an die jeweiligen Bordnetze des Magnetschwebefahrzeugs 11 angeschlossen sind und z.B. zur Aufladung von Bordbatterien dienen können. Alternativ können andere Einrichtungen verwendet werden, die z.B. von einer berührungslosen, induktiven Energieübertragung vom Fahrweg auf das Magnetschwebefahrzeug 11 Gebrauch machen.

Magnetschwebefahrzeuge der beschriebenen Art und Verfahren zu ihrem Betrieb sind dem Fachmann z.B. aus dem Druckschriften DE 30 04 704 C2, DE 10 2004 012 746 A1) und DE 10 2004 013 690 A1 bekannt, die hiermit zur Vermeidung von Wiederholungen durch Referenz auf sie zum Gegenstand der vorliegenden Offenbarung gemacht werden.

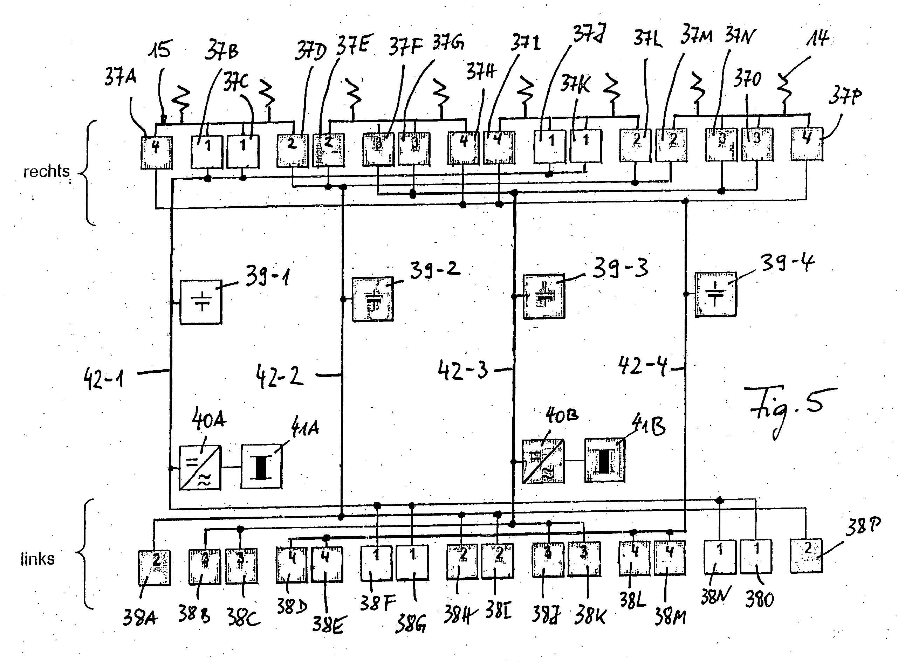

Bisher ist es erforderlich, alle Tragmagneteinheiten 18 für die Durchführung eines Anhebe- oder Absetzvorgangs für das Magnetschwebefahrzeug 11 durch Zuführung entsprechender Ströme oder durch Abschaltung dieser Ströme gleichzeitig zu aktivieren bzw. zu deaktivieren. Erfindungsgemäß wird dagegen vorgeschlagen, die Tragmagneteinheiten 18 zeitlich versetzt und damit nacheinander zu aktivieren oder zu deaktivieren. Hierzu wird eine in Fig. 5 schematisch dargestellte Steuervorrichtung verwendet, die nachfolgend anhand eines speziellen Ausführungsbeispiels näher erläutert wird. Dabei wird entsprechend Fig. 1 davon ausgegangen, daß das Magnetschwebefahrzeug 11, in der Längsrichtung 13 betrachtet, auf der rechten und linken Fahrzeugseite je neun Tragmagnete aufweist. Wie in Fig. 1 angedeutet ist, sind die sieben im mittleren Fahrzeugteil liegenden Tragmagnete aus je zwei hintereinander angeordneten Tragmagneteinheiten 18 gebildet. Außerdem ist am Vorderende bzw. Bug (in Fig. 1 ganz links) sowie am hinteren Ende (Fig. 1 ganz rechts) des Fahrzeugs 11 jeweils eine einzelne Tragmagneteinheit vorgesehen, die jeweils einen achten und neunten Tragmagneten bilden. In Fig. 5 sind diese Tragmagneteinheiten von vorn nach hinten mit den Bezugszeichen 37A bis 37P für die rechte Fahrzeugseite und mit 38A bis 38P für die linke Fahrzeugseite bezeichnet. Ferner sind in Fig. 5 vier Bordnetze 39-1 bis 39-4 vorhanden, die z.B. im wesentlichen durch 440 V - Gleichspannungs-Batterien gebildet sind. Schließlich ist z.B. mit den Bordnetzen 39-1 und 39-3 je ein DC/AC-Wandler 40A, 40B verbunden, der die 440 V-Gleichspannung in eine 230 V-Wechselspannung umformt, mittels derer Pneumatik-Baugruppen 41A, 41B betrieben werden, zu denen z.B. auch die Steuereinheiten 32 (Fig. 2) für die Luftfedern 14 zählen.

Das Bordnetz 39-1 ist über eine schematisch dargestellte Leitung 42-1 einerseits mit den Tragmagneteinheiten 37B, 37C, 37J und 37K der rechten Fahrzeugseite und andererseits mit den Tragmagneteinheiten 38F, 38G, 38N und 380 der linken Fahrzeugseite verbunden. Das Bordnetz 39-2 ist über eine Leitung 42-2 einerseits mit den Tragmagneteinheiten 37D, 37E, 37L und 37M der rechten Fahrzeugseite und andererseits mit den Tragmagneteinheiten 38A, 38H, 38I und 38P der linken Fahrzeugseite verbunden. Das Bordnetz 39-3 ist über eine Leitung 42-3 einerseits mit den Tragmagneteinheiten 37F, 37G, 37N und 370 der rechten Fahrzeugseite und andererseits mit den Tragmagneteinheiten 38B, 38C, 38J und 38K der linken Fahrzeugseite verbunden. Schließlich ist das Bordnetz 39-4 über eine Leitung 42-4 einerseits mit den Tragmagneteinheiten 37A, 37H, 37I und 37P der rechten Fahrzeugseite und andererseits mit den Tragmeten 38D, 38E, 38L und 38M der linken Fahrzeugseite verbünden. Das bedeutet, daß die Elektromagnete der Tragmagneteinheiten 37 und 38 über die Leitungen 42-1 bis 42-4 nur über jeweils ein zugeordnetes der vier Bordnetze 39-1 bis 39-4 mit Strom versorgt werden, wobei die Größe dieser Ströme im wesentlichen davon abhängt, welche Sollwerte den zugehörigen Reglern 26 vorgegeben werden. Zur Erleichterung der Übersicht sind in Fig. 5 alle Tragmagneteinheiten 37, 38 zusätzlich mit einer Nummer 1 bis 4 versehen, die angibt, mit welcher der vier Leitungen 42-1 bis 42-4 und mit welchem der vier Bordnetze 39-1 bis 39-4 sie verbunden sind.

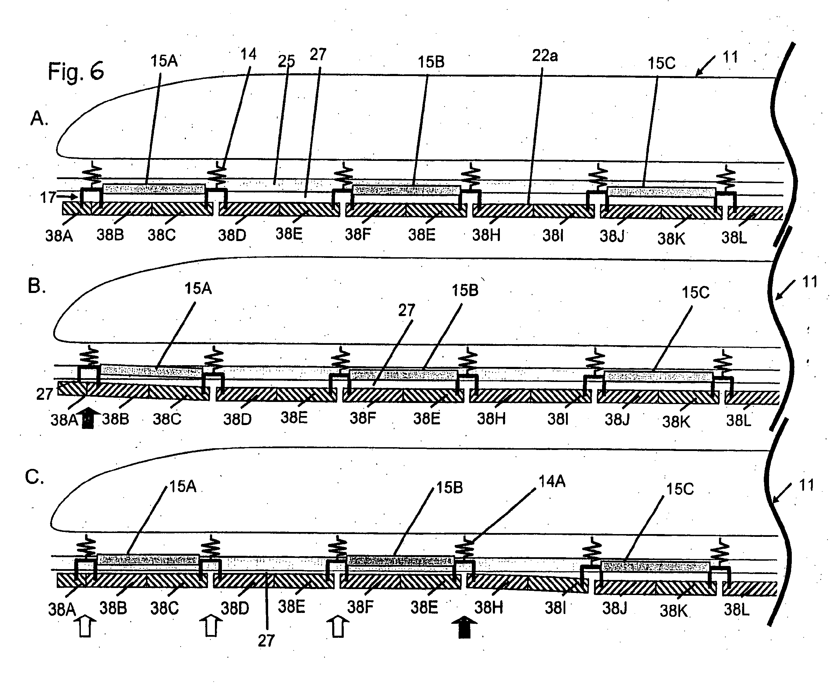

Das beschriebene Magnetschwebefahrzeug wird im wesentlichen wie folgt betrieben:
Es wird zunächst das Anheben des Magnetschwebefahrzeugs 11 vom Fahrweg in den Schwebezustand beschrieben. Gemäß Fig. 6A, die eine Seitenansicht auf die linke Fahrzeugseite zeigt, befindet sich das Magnetschwebefahrzeug 11 noch in einer abgesenkten Stellung, wobei es z.B. mit den Gleitkufen 21 (Fig. 2) auf den Gleitschienen 20 aufgesetzt ist. In diesem Zustand haben die Polflächen 22a (Fig. 3) der Tragmagneteeinheiten 38 einen vergleichsweise großen Abstand von der Reaktionsschiene 25, so daß der Magnetspalt 27 z.B. eine Größe von 40 mm hat.

Es werden nun zunächst, z.B. beginnend am Bug des Magnetschwebefahrzeugs 11, die ersten zwei, starr miteinander verbundenen Tragmagneteinheiten 37a, 37b, 38a, 38b der rechten und linken Fahrzeugseite (Fig. 5 und 6) aktiviert, indem ihren Reglern 29 (Fig. 3) über die Leitungen 30 z.B. Sollwerte vorgegeben werden, die einem Tragspalt 27 von 10 mm entsprechen. Infolgedessen werden den Wicklungen 24 der Tragmagneteinheiten 37A, 37B, 38A und 38B entsprechende Ströme zugeführt, wobei das vorn liegende Schwebegestell 15A an seinem Vorderende angehoben wird. Das ist in Fig. 6B angedeutet, wonach das Schwebegestell 15A leicht schräg gestellt ist, da es mit seiner Vorderseite zusammen mit den Tragmagneteinheiten 38A und 38B unter Bildung eines Tragspalts 27 von z.B. 10 mm angehoben wurde, während die mit seinem Hinterende gekoppelte Tragmagneteinheit 38C noch nicht erregt (aktiviert) ist und daher noch einen Tragspalt von 40 mm bildet.

Nachdem die Polflächen 22a der Tragmagneteinheiten 38A, 38B und entsprechend auch der Tragmagneteinheiten 37A, 37B der rechten Fahrzeugseite auf das Spaltmaß von 10 mm eingestellt sind, wird in einem zweiten Verfahrensschritt eine zweite Gruppe von Tragmagneteinheiten aktiviert, wobei diese Gruppe hier die Tragmagneteinheiten 38C 38D (und entsprechend 37C, 37D) enthält. Dadurch wird einerseits das Schwebegestell 15A auch an seinem Hinterende auf ein Spaltmaß von 10 mm angehoben. Andererseits wird auch die Tragmagneteinheit 38D angehoben, die zusammen mit der starr mit ihr verbundenen Tragmagneteinheit 38E einen Tragmagneten bildet, der zwischen dem Schwebegestell 15A und einem in Längsrichtung 13 folgenden Schwebegestell 15B angeordnet ist und daher etwas schräg gestellt wird, wie in Fig. 6B beispielhaft nur für den aus den Tragmagneteinheiten 38B und 38C gebildeten Tragmagneten gezeigt ist.

In einem weiteren Schritt werden die Tragmagneteinheiten 38E, 38F (und 37E, 37F) aktiviert, wodurch einerseits die aus ihnen gebildeten Tragmagnete auch an ihren Hinterenden angehoben werden, während andererseits die Vorderenden der Schwebegestelle 15B angehoben werden, wie dies in Fig. 6B für das Schwebegestell 15A gezeigt ist. Diese Vorgänge wiederholen sich dann schrittweise, bis die Polflächen 22a aller Tragmagneteinheiten 37, 38 das Sollmaß des Tragspalts 27 von 10 mm erreicht haben und mittels der Regelkreise 26 nach Fig. 3 jeweils in dieser Position gehalten werden.

Fig. 6C zeigt eine Stellung, bei welcher gerade der vierte Verfahrensschritt durchgeführt wurde und demgemäß auch bereits die Tragmagneteinheiten 38G, 38H aktiviert worden sind. Es versteht sich, daß auf der in Fig. 6 nicht sichtbaren rechten Fahrzeugseite jeweils dieselben Vorgänge ablaufen, d.h. im Zustand nach Fig. 6C sind auch die Tragmagneteinheiten 37G, 37H aktiviert.

Nachdem alle Tragmagneteinheiten 37, 38 nacheinander mit Strom versorgt sind, befindet sich das Magnetschwebefahrzeug 11 im üblichen Schwebezustand, der für den normalen Fahrbetrieb erforderlich ist. Dieser Zustand wird durch die Regelkreise 26 so lange aufrecht erhalten, wie sich das Fahrzeug in Fahrt befindet.

Soll das Magnetschwebefahrzeug 11, nachdem es z.B. in einem Bahnhof zum Stillstand gebracht worden ist, mit seinen Gleitkufen 21 wieder auf den Gleitschienen 20 abgesetzt werden, dann wird das beschriebene Verfahren in entsprechender Weise, jedoch in umgekehrter Richtung durchgeführt, indem z.B. den Reglern 29 über die Leitungen 30 Sollwerte vorgegeben werden, die einem Tragspalt 27 von 40 mm oder zweckmäßig einem unendlich großen Tragspalt 27 entsprechen. Auch hier werden die Tragmagneteinheiten 37, 38 zeitlich versetzt und gruppenweise nacheinander angesteuert, indem der Absetzvorgang z.B. mit der ersten Gruppe 37A, 37B, 38A, 38B begonnen und mit der achten Gruppe 370, 37P, 380, 38P beendet wird.

Zur Vermeidung von abrupten Übergängen von dem einen in den anderen Zustand werden die Sollwerte, wie in Fig. 4 angedeutet ist, nicht sprungartig, sondern längs einer allmählich abfallenden bzw. ansteigenden Rampe entsprechend allmählich abnehmenden bzw. zunehmenden Strömen vorgegeben. Dennoch kann der pro Gruppe von Tragmagneteinheiten durchgeführte Abhebe- oder Absetzvorgang sehr schnell, z.B. in maximal je einer Sekunde, durchgeführt werden, so daß der Anhebe- und Absetzvorgang für das gesamte Magnetschwebefahrzeug 11 nur wenige Sekunden dauert, was von den Reisenden kaum wahrgenommen wird. Abgesehen davon kann zur Umschaltung von dem einen auf den anderen Sollwert eine einfache Schalteinheit vorgesehen sein, wie in Fig. 3 durch das Bezugszeichen 43 angedeutet ist.

Aus Fig. 5 ist ersichtlich, daß die gruppenweise Aktivierung/Deaktivierung der Tragmagneteinheiten 37, 38 vorzugsweise so erfolgt, daß jedes der vier vorhandenen Bordnetze 39-1 bis 39-4 in jedem Verfahrensschritt stets nur eine einzige Tragmagneteinheit 37, 38 mit Strom versorgt. Im ersten Schritt bedient z.B. das Bordnetz 39-1 über die Leitung 42-1 die Tragmagneteinheit 37B, das Bordnetz 39-2 über die Leitung 42-2 die Tragmagneteinheit 38A, das Bordnetz 39-3 über die Leitung 42-3 die Tragmagneteinheit 38B und Bordnetz 39-4 über die Leitung 42-4 die Tragmagneteinheit 37A. Entsprechend würde im achten und letzten Schritt das Bordnetz 39-1 die Tragmagneteinheit 380, das Bordnetz 39-2 die Tragmagneteinheit 38P, das Bordnetz 39-3 die Tragmagneteinheit 370 und das Bordnetz 39-4 die Tragmagneteinheit 37P mit Strom versorgen. Dadurch ergibt sich der wesentliche Vorteil, daß alle Bordnetze 39 stets gleich stark belastet und nur für die Versorgung einer am Anhebe- oder Absetzvorgang beteiligten Tragmagneteinheit 37 bzw. 38 zuständig sind. Dadurch ist es möglich, die Bordnetze 39, insbesondere deren Batterien, weit schwächer als bisher auszulegen, da jedes Bordnetz für diesen Vorgang bisher acht Tragmagneteinheiten gleichzeitig mit Strom versorgen mußte.

Weiter werden die Bordnetze 39 so geschaltet, daß sie jeweils sowohl auf der rechten als auch auf der linken Fahrzeugseite befindliche Tragmagneteinheiten bedienen. Dadurch ergibt sich der Vorteil, daß beim Ausfall eines der Bordnetze 39 nicht eine Fahrzeugseite komplett funktionslos wird. Wie insbesondere Fig. 5 zeigt, sind beim Ausfall z.B. des Bordnetzes 39-3 nur die Tragmagneteinheiten 37,F, 37G, 37N und 370 auf der einen Seite und die Tragmagneteinheiten 38B, 38C, 38J und 38K auf der anderen Seite nicht mehr für den Abhebe/Absetz-Vorgang brauchbar, während alle übrigen Tragmagneteinheiten weiterhin voll einsatzfähig sind. Vorteilhaft ist ferner, daß sich die ausfallenden Tragmagneteinheiten rechts und links nicht genau gegenüber stehen, sondern in Längsrichtung 13 relativ zueinander versetzt angeordnet sind.

Ein weiterer wesentlicher Vorteil der Erfindung kann dadurch erzielt werden, daß die Luftfedern 14 mit Hilfe der Steuervorrichtungen 32 (Fig. 2) und der DC/AC-Wandler 40A, 40B (Fig. 5) für die Pneumatik-Baugruppen 41A, 41B während der Anhebe- und Absetzvorgänge entlüftet werden. Ist z.B. eine Luftfeder 14A in Fig. 6C entlüftet, wenn die betreffenden Tragmagneteinheiten 38G, 38H (und entsprechend auf der rechten Fahrzeugseite die Tragmagneteinheiten 37G, 37H) aktiviert oder deaktiviert werden, dann sind letztere im Augenblick des Hebe- oder Senkvorgangs weitgehend vom Gewicht der entsprechenden Schwebegestelle (hier 15B) entlastet. Zu ihrer Betätigung werden daher weit geringere Ströme benötigt, als wenn der Hebe- und Senkvorgang unter voller Last durchgeführt würde. Nach Beendigung des Hebe- und Senkvorgangs werden die Luftfedern 14 wieder belüftet. Die hierzu erforderlichen Mittel können analog zu denen von bekannten Luftfeder-Steuerungen sein (z.B. DE 20 2004 013 690A1).

Die Erfindung ist nicht auf die beschriebenen Ausführungsbeispiele beschränkt, die auf vielfache Weise abgewandelt werden können. Dies gilt zunächst für die Zahl der Schritte, die während des Abhebens oder Absenkens des Magnetschwebefahrzeugs 1 mit zeitlichem Versatz durchgeführt werden. Beispielsweise wäre es möglich, nur vier Schritte durchzuführen und jeweils zwei Tragmagneteinheiten 37 oder 38 mit jedem Bordnetz 39 zu speisen. Weiterhin hängt die Zahl der durchzuführenden Schritte weitgehend von der Konstruktion des jeweiligen Magnetschwebefahrzeugs 1 und insbesondere von der Zahl der vorhandenen Schwebegestelle 15 und Schwebegestellrahmen 17 oder diesen analogen Einrichtungen ab. Weiterhin ist klar, daß die Aktivierung/Deaktivierung der Tragmagneteinheiten mit einer anderen als der beschriebenen Reihenfolge und z.B. in umgekehrter Richtung von hinten nach vom erfolgen kann. Entsprechend können pro Magnetschwebefahrzeug mehr oder weniger als sechszehn Tragmagneteinheiten auf jeder Seite vorgesehen sein, wobei auch Lösungen denkbar sind, bei denen die Tragmagneteinheiten nur in einem mittleren Teil des Magnetschwebefahrzeugs angeordnet sind. Außerdem ist die Anwendung von vier Bordnetzen pro Magnetschwebefahrzeug 11 nur als Beispiel zu betrachten. Ferner ist es möglich, die Leitungen 42-1 bis 42-4 (Fig. 5) mit zusätzlichen und/oder anderen als den gezeigten Stromquellen, insbesondere z.B. mit den üblichen Lineargeneratoren 33 (Fig. 3), Stromschienen, induktiven Energieübertragern usw. zu verbinden. Weiterhin ist es zur Schonung der Bordnetze vorteilhaft, auch etwa vorhandene Führmagnetsysteme während der Abhebe/Absenk-Vorgänge auszuschalten, weil sie während dieser Phasen nicht benötigt werden und allenfalls den Strombedarf erhöhen würden. Schließlich versteht sich, daß die verschiedenen Merkmale auch in anderen als den beschriebenen und dargestellten Kombinationen angewendet werden können.

## Patentansprüche

1. Verfahren zum Anheben und Absetzen eines Magnetschwebefahrzeugs (11), das eine Mehrzahl von in einer Längsrichtung (13) hintereinander angeordneten, Elektromagnete aufweisenden Tragmagneteinheiten (18, 37, 38) enthält, wobei das Fahrzeug (11) dadurch von einem Fahrweg abgehoben und in einen Schwebezustand gebracht wird, daß die Tragmagneteinheiten (18, 37, 38) durch Einschaltung elektrischer Ströme aktiviert werden, und dadurch aus einem Schwebezustand abgesenkt und auf dem Fahrweg abgesetzt wird, daß die Tragmagneteinheiten (18, 37, 38) durch Abschaltung der elektrischen Ströme deaktiviert werden, **dadurch gekennzeichnet, daß** die Tragmagneteinheiten (18, 37, 38) beim Anheben bzw. Absetzen des Fahrzeugs (11) gruppenweise in mehreren zeitlich versetzten Schritten aktiviert bzw. deaktiviert werden, wobei die Aktivierung bzw. Deaktivierung einer nachfolgenden Gruppe erst erfolgt, wenn die Tragmagneteinheiten (18, 37, 38) einer vorherigen Gruppe ein vorgegebenes Spaltmaß erreicht haben.

2. Verfahren nach Anspruch 1, **dadurch gekennzeichnet, daß** die Tragmagneteinheiten (18, 15 37, 38), in Längsrichtung (13) betrachtet, in der Reihenfolge ihrer Anordnung nacheinander aktiviert bzw. deaktiviert werden.

3. Verfahren nach Anspruch 1 oder 2, **dadurch gekennzeichnet, daß** bei einem Magnetschwebefahrzeug (11), das eine Mehrzahl von in Längsrichtung (13) hintereinander angeordneten Schwebegestellrahmen (17) enthält, die einerseits mit wenigstens einer Tragmagneteinheit (18, 37, 38) gekoppelt und andererseits über ihnen zugeordnete Luftfedern (14) mit einem Wagenkasten (12) des Fahrzeugs (11) verbunden sind, die Tragmagneteinheiten (18, 37, 38) so aktiviert bzw. deaktiviert werden, daß die Schwebegestellrahmen (17) in der Reihenfolge ihrer Anordnung nacheinander angehoben bzw. abgesenkt werden.

4. Verfahren nach Anspruch 3, **dadurch gekennzeichnet, daß** während des Anhebens bzw. Absenkens eines Schwebegestellrahmens (17) die ihnen zugeordneten Luftfedern (14) zumindest teilweise entlüftet werden.

5. Verfahren nach Anspruch 3 oder 4, **dadurch gekennzeichnet, daß** bei einem Magnetschwebefahrzeug (11), das eine Mehrzahl von in Längsrichtung (13) hintereinander angeordneten Schwebegestellen (15) aufweist, die an ihren Enden mit je einem Schwebegestellrahmen (17) versehen sind, der mit zwei hintereinander liegenden Tragmagneteinheiten (18, 37, 38) gekoppelt ist, beim Anheben bzw. Absetzen des Magnetschwebefahrzeugs (11) jeweils beide Tragmagneteinheiten (18. 37. 38) gleichzeitig aktiviert bzw. deaktiviert werden.

6. Verfahren nach einem der Ansprüche 1 bis 5, **dadurch gekennzeichnet, daß** bei einem Fahrzeug (11), das zusätzlich durch elektrische Ströme aktivierbare Führmagnetsysteme aufweist, die Führmagnetsysteme beim Anheben bzw. Absetzen des Magnetschwebefahrzeugs (11) deaktiviert werden.

7. Magnetschwebefahrzeug mit einer Mehrzahl von in einer Längsrichtung (13) hintereinander angeordneten, Elektromagnete aufweisenden Tragmagneteinheiten (18, 37, 38), die durch Ein- und Ausschalten elektrischer Ströme aktivierbar und deaktivierbar sind, und mit einer Steuervorrichtung zur Steuerung dieser Ströme derart, daß das Magnetschwebefahrzeug (11) durch Aktivierung der Tragmagneteinheiten (18, 37, 38) von einem Fahrweg abhebbar und durch Deaktivierung der Tragmagneteinheiten (18, 37, 38) auf dem Fahrweg absetzbar ist, **dadurch gekennzeichnet, daß** die Steuervorrichtung so eingerichtet ist, daß die Tragmagneteinheiten (18, 37, 38) beim Anheben bzw. Absetzen gruppenweise in zeitlich versetzten Schritten aktiviert bzw. deaktiviert werden, wobei die Aktivierung bzw. Deaktivierung einer nachfolgenden Gruppe erst erfolgt, wenn die Tragmagneteinheiten (18, 37, 38) einer vorherigen Gruppe ein vorgegebenes Spaltmaß erreicht haben.

8. Magnetschwebefahrzeug nach Anspruch 7, **dadurch gekennzeichnet, daß** die Steuervorrichtung so eingerichtet ist, daß die Tragmagneteinheiten (18, 37, 38), in Längsrichtung (13) betrachtet, in der Reihenfolge ihrer Anordnung nacheinander aktivierbar bzw. deaktivierbar sind.

9. Magnetschwebefahrzeug nach Anspruch 7 oder 8, **dadurch gekennzeichnet, daß** es einen Wagenkasten (12) und eine Mehrzahl in Längsrichtung (13) hintereinander angeordneten Schwebegestellrahmen (17) enthält, die einerseits mit wenigstens je einer Tragmagneteinheit (18, 37, 38) gekoppelt und andererseits über wenigstens je eine ihnen zugeordnete, steuerbare Luftfeder (14) mit dem Wagenkasten (12) verbunden sind, und daß die Steuervorrichtung so eingerichtet ist, daß die Schwebegestellrahmen (17) in der Reihenfolge ihrer Anordnung nacheinander angehoben bzw. abgesenkt werden.

10. Magnetschwebefahrzeug nach Anspruch 9, **dadurch gekennzeichnet, daß** es Mittel zur Entlüftung der Luftfedern (14) beim Anheben bzw. Absenken der ihnen zugeordneten Schwebegestellrahmen (17) aufweist.

11. Magnetschwebefahrzeug nach Anspruch 9 und 10, **dadurch gekennzeichnet, daß** es eine Mehrzahl von in Längsrichtung (13) hintereinander angeordneten Schwebegestellen (15) aufweist, die an ihren Enden mit je einem Schwebegestellrahmen (17) verbunden sind, der mit zwei hintereinander angeordneten Tragmagneteinheiten (18, 37, 38) gekoppelt ist, und daß die Steuervorrichtung so eingerichtet ist, daß beim Anheben bzw. Absenken eines Schwebegestellrahmens (17) jeweils beide diesen zugeordnete Tragmagneteinheiten (18, 37, 38) aktiviert bzw. deaktiviert werden.

12. Magnetschwebefahrzeug nach einem der Ansprüche 7 bis 11, **dadurch gekennzeichnet, daß** es ein mit Elektromagneten versehenes, durch elektrische Ströme aktivierbares und deaktivierbares Führmagnetsystem und Mittel zur Deaktivierung des Führmagnetsystems während eines Anhebe- bzw. Absetzvorgangs aufweist.

## Claims

1. A method for raising and lowering a magnetic levitation vehicle (11) which comprises a plurality of support magnet units (18, 37, 38) which comprise electromagnets arranged one behind the other in longitudinal direction (13), whereby the vehicle (11) is raised up from a track and brought into a levitated position by switching on electrical currents which activate the support magnet units (18, 37, 38), and is lowered from the levitated position onto the track by switching off the electrical currents thus deactivating the support magnet units (18, 37, 38), **characterised in that** during the process of raising or lowering the vehicle (11), groups of support magnet units (18, 37, 38) are activated or deactivated respectively in several time-delayed stages, whereby the activation or deactivation of a subsequent group only occurs once the support magnet units (18, 37, 38) of a preceding group have reached a given clearance.

2. The method according to claim 1, **characterised in that** the support magnet units (18, 15, 37, 38), are activated or deactivated respectively one after the other in the order in which they are arranged, viewed in longitudinal direction (13).

3. The method according to claim 1 or 2, **characterised in that** with a magnetic levitation vehicle (11) which comprises a plurality of levitation rack frames (17) arranged one after the other in longitudinal direction (13), which on one side are coupled with at least one support magnet unit (18, 37, 38), and on the other side are connected with a carriage body (12) of the vehicle (11) via associated air cushions (14), the support magnet units (18, 37, 38) are activated or deactivated respectively in such a way that the levitation rack frames (17) are raised or lowered one after the other in the order in which they are arranged.

4. The method according to claim 3, **characterised in that** during the raising or lowering of a levitation rack frame (17) the associated air cushions (14) are at least partially deflated.

5. The method according to claim 3 or 4, **characterised in that** with a magnetic levitation vehicle (11) which comprises a plurality of levitation racks (15) arranged one after the other in longitudinal direction (13), which at their ends are provided with a levitation rack frame (17) each, which is coupled to two consecutively arranged support magnet units (18, 37, 38), both support magnet units (18, 37, 38) are respectively simultaneously activated or deactivated during raising or lowering the magnetic levitation vehicle (11).

6. The method according to claims 1 to 5, **characterised in that** with a vehicle (11), which in addition has guiding magnet systems which can be activated by electrical currents, the guiding magnet systems are deactivated during raising or lowering the magnetic levitation vehicle (11).

7. A magnetic levitation vehicle with a plurality of support magnet units (18, 37, 38) comprising electromagnets arranged one after the other in longitudinal direction (13), which can be activated and deactivated by switching electrical currents on or off, and a control device for regulating these electrical currents so that the magnetic levitation vehicle (11) can be raised up from the track by activating the support magnet units (18, 37, 38) and lowered down onto the track by deactivating the support magnet units (18, 37, 38), **characterised in that** the control device is adapted so that during raising or lowering the vehicle, groups of support magnet units (18, 37, 38) are activated or deactivated respectively in time-delayed stages, whereby the activation or deactivation of a subsequent group only occurs once the support magnet units (18, 37, 38) of a preceding group have reached a given clearance.

8. The magnetic levitation vehicle according to claim 7, **characterised in that** the control device is adapted so that the support magnet units (18, 37, 38), can be activated or deactivated respectively one after the other in the order in which they are arranged, viewed in longitudinal direction (13).

9. The magnetic levitation vehicle according to claim 7 or 8, **characterised in that** it comprises a carriage body (12) and a plurality of levitation rack frames (17) arranged one after another in longitudinal direction (13), which are each coupled on one side to at least one support magnet unit (18, 37, 38) and on the other side are connected via at least one associated controllable air cushion (14) with the carriage body (12), and **in that** the control device is adapted so that the levitation rack frames (17) are raised or lowered one after the other in the order in which they are arranged.

10. The magnetic levitation vehicle according to claim 9, **characterised in that** it comprises means for deflating the air cushions (14) during raising or lowering their associated levitation rack frames (17).

11. The magnetic levitation vehicle according to claims 9 and 10, **characterised in that** it comprises a plurality of levitation racks (15) arranged one after the other in longitudinal direction (13), which at their ends are connected with a levitation rack frame (17) each, which is coupled to two consecutively arranged support magnet units (18, 37, 38), and **in that** the control device is adapted so that during raising or lowering a levitation rack frame (17) both support magnet units (18, 37, 38) associated therewith are activated or deactivated, respectively.

12. The magnetic levitation vehicle according to one of claims 7 to 11, **characterised in that** it comprises a guiding magnet system which is equipped with electromagnets and can be activated and deactivated using electrical currents, and means for deactivating the guiding magnet system during a raising or lowering operation.

## Revendications

1. Procédé pour soulever et déposer un véhicule à sustentation magnétique (11), lequel comprend une pluralité d'unités d'aimants de sustentation (18, 37, 38), présentant des électroaimants, disposées les unes derrière les autres dans une direction longitudinale (13), le véhicule (11) étant soulevé d'une voie de circulation et étant amené dans un état de sustentation en ce que les unités d'aimants de sustentation (18, 37, 38) sont activées par commutation de courants électriques, et étant abaissé à partir d'un état de sustentation et déposé sur la voie de circulation en ce que les unités d'aimants de sustentation (18, 37, 38) sont désactivées en coupant les courants électriques, **caractérisé en ce que** les unités d'aimants de sustentation (18, 37, 38), lors du soulèvement ou du dépôt du véhicule (11), sont activées ou désactivées par groupes en plusieurs étapes décalées dans le temps, l'activation ou la désactivation d'un groupe suivant ayant seulement lieu si les unités d'aimants de sustentation (18, 37, 38) d'un groupe précédent ont atteint un espacement prescrit.

2. Procédé selon la revendication 1, **caractérisé en ce que** les unités d'aimants de sustentation (18, 15, 37, 38), lorsque vues en direction longitudinale (13), sont activées ou désactivées les unes après les autres dans l'ordre de leur disposition.

3. Procédé selon la revendication 1 ou 2, **caractérisé en ce que**, en cas d'un véhicule à sustentation magnétique (11) qui comprend une pluralité de cadres de châssis de sustentation (17) disposés les uns derrière les autres en direction longitudinale (13), lesquels sont couplés d'un côté avec au moins une unité d'aimants de sustentation (18, 37, 38) et sont reliés de l'autre côté à une caisse de voiture (12) du véhicule (11) par l'intermédiaire de ressorts pneumatiques (14) qui leur sont affectés, les unités d'aimants de sustentation (18, 37, 38) sont activées ou désactivées de manière à ce que les cadres de châssis de sustentation (17) soient soulevés ou abaissés les uns après les autres dans l'ordre de leur disposition.

4. Procédé selon la revendication 3, **caractérisé en ce que**, pendant le soulèvement ou l'abaissement d'un cadre de châssis de sustentation (17), les ressorts pneumatiques (14) qui leur sont associés sont au moins partiellement purgés.

5. Procédé selon la revendication 3 ou 4, **caractérisé en ce que**, en cas d'un véhicule à sustentation magnétique (11) qui présente une pluralité de châssis de sustentation (15) disposés les uns derrière les autres en direction longitudinale (13), lesquels sont munis à leurs extrémités respectivement d'un cadre de châssis de sustentation (17) couplé avec deux unités d'aimants de sustentation (18, 37, 38) situées l'une derrière l'autre, lors du soulèvement ou du dépôt du véhicule à sustentation magnétique (11), respectivement les deux unités d'aimants de sustentation (18, 37, 38) sont activées ou désactivées simultanément.

6. Procédé selon l'une des revendications 1 à 5, **caractérisé en ce que**, dans le cas d'un véhicule (11) qui présente de manière supplémentaire des systèmes d'aimants de guidage pouvant être activés par des courants électriques, les systèmes d'aimants de guidage sont désactivés lors du soulèvement ou dépôt du véhicule de sustentation magnétique (11).

7. Véhicule à sustentation magnétique avec une pluralité d'unités d'aimants de sustentation (18, 37, 38), présentant des électroaimants, disposées les unes derrière les autres dans une direction longitudinale (13), lesquelles peuvent être activées ou désactivées en commutant des courants électriques et en les coupant, et avec un dispositif de commande pour commander ces courants de manière à ce que le véhicule à sustentation magnétique (11) puisse être soulevé d'une voie de circulation en activant les unités d'aimants de sustentation (18, 37, 38) et puisse être déposé sur la voie de circulation par désactivation des unités d'aimants de sustentation (18, 37, 38), **caractérisé en ce que** le dispositif de commande est conçu de manière à ce que les unités d'aimants de sustentation (18, 37, 38), lors du soulèvement ou dépôt, sont activées ou désactivées par groupes en plusieurs étapes décalées dans le temps, l'activation ou la désactivation d'un groupe suivant ayant seulement lieu si les unités d'aimants de sustentation (18, 37, 38) d'un groupe précédent ont atteint un espacement prescrit.

8. Véhicule à sustentation magnétique selon la revendication 7, **caractérisé en ce que** le dispositif de commande est conçu de manière à ce que les unités d'aimants de sustentation (18, 37, 38), lorsque vues en direction longitudinale (13), peuvent être activées ou désactivées les unes après les autres dans l'ordre de leur disposition.

9. Véhicule à sustentation magnétique selon la revendication 7 ou 8, **caractérisé en ce qu'**il comprend une caisse de voiture (12) et une pluralité de cadres de châssis de sustentation (17) disposés les uns derrière les autres en direction longitudinale (13), lesquels sont couplés d'un côté avec au moins une unité d'aimants de sustentation (18, 37, 38) respective et sont reliés de l'autre côté à la caisse de voiture (12) par l'intermédiaire de respectivement au moins un ressort pneumatique (14) pouvant être commandé, lesquels leur sont affectés, et **en ce que** le dispositif de commande est conçu de manière à ce que les cadres de châssis de sustentation (17) sont soulevés ou abaissés les uns après les autres dans l'ordre de leur disposition.

10. Véhicule de sustentation magnétique selon la revendication 9, **caractérisé en ce qu'**il présente des moyens pour purger les ressorts pneumatiques (14) lors du soulèvement ou abaissement des cadres de châssis de sustentation (17) qui leur sont associés.

11. Véhicule de sustentation magnétique selon la revendication 9 et 10, **caractérisé en ce qu'**il présente une pluralité de châssis de sustentation (15) disposés les uns derrière les autres en direction longitudinale (13), lesquels sont reliés à leurs extrémités à un cadre de châssis de sustentation (17) respectif, lequel est couplé avec deux unités d'aimants de sustentation (18, 37, 38) disposées l'une derrière l'autre, et **en ce que** le dispositif de commande est conçu de manière à ce que, lors du soulèvement ou abaissement d'un cadre de châssis de sustentation (17), respectivement les deux unités d'aimants de sustentation (18, 37, 38) qui leur sont associées sont activées ou désactivées.

12. Véhicule de sustentation magnétique selon l'une des revendications 7 à 11, **caractérisé en ce qu'**il présente un système d'aimants de guidage muni d'électroaimants pouvant être activé ou désactivé par des courants électriques et des moyens pour la désactivation du système d'aimants de guidage pendant un processus de soulèvement ou de dépôt.
